(19) Europäisches Patentamt
European Patent Office
Office européen des brevets

(11) **EP 3 774 603 B1**

(12) **EUROPÄISCHE PATENTSCHRIFT**

(45) Veröffentlichungstag und Bekanntmachung des Hinweises auf die Patenterteilung:
**08.06.2022  Patentblatt 2022/23**

(21) Anmeldenummer: **19732114.4**

(22) Anmeldetag: **20.03.2019**

(51) Internationale Patentklassifikation (IPC):
**B65G 27/30** *(2006.01)*   **B65G 27/28** *(2006.01)*
**B65G 27/32** *(2006.01)*   **B65G 43/00** *(2006.01)*

(52) Gemeinsame Patentklassifikation (CPC):
**B65G 27/30; B65G 27/28; B65G 27/32;**
**B65G 43/00;** B65G 2203/042

(86) Internationale Anmeldenummer:
**PCT/IB2019/052268**

(87) Internationale Veröffentlichungsnummer:
**WO 2019/193442 (10.10.2019 Gazette 2019/41)**

(54) **VIBRATIONSFÖRDERER**

VIBRATION FEEDER

TRANSPORTEUR À VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2018  CH 4412018**

(43) Veröffentlichungstag der Anmeldung:
**17.02.2021  Patentblatt 2021/07**

(73) Patentinhaber: **K-TRON Technologies, Inc.**
**Sewell, NJ 08080 (US)**

(72) Erfinder: **HELFENSTEIN, Urs**
**5707 Seengen (CH)**

(74) Vertreter: **Stump, Beat**
**Stump & Partner AG**
**Zimmergasse 16**
**8008 Zürich (CH)**

(56) Entgegenhaltungen:
EP-A1- 1 460 006    CH-A1- 712 253
DE-A1-102015 212 538    GB-A- 2 426 562
JP-A- 2014 201 390

**Beschreibung**

Die vorliegende Erfindung betrifft einen Vibrationsförderer gemäss dem Oberbegriff von Anspruch 1.

Solche Vibrationsförderer werden in vielen Industriezweigen eingesetzt, für alle möglichen Materialien, soweit diese überhaupt durch einen Vibrationsförderer förderbar sind. Dabei werden die schüttfähigen Materialien auf ein Förderelement ausgegeben, meist eine Förderrinne, die dann eine zyklische Vorwärts- / Aufwärtsbewegung mit einem entsprechenden Rücklauf - die Vibration - ausführt, wodurch die einzelnen Partikel des Materials in einem Wurfwinkel vorwärts und zugleich etwas hochgeworfen werden. Das Förderelement führt den Rücklauf aus, bevor die Partikel wieder auf ihm aufliegen, so dass mit der nächsten Vorwärts- / Aufwärtsbewegung die Partikel einen Schritt weiter gefördert werden können. Bei kleinen Auslenkungen kann auch vorwärts gefördert werden durch Reibungsunterschiede beim Vor- und Rücklauf. EP1460006A1 offenbart einen Vibrationsförderer gemäß dem Oberbegriff des Anspruchs 1.

Vibrationsförderer besitzen entsprechend eine vibrierende Trägeranordnung für das auf ihr aufliegende, beispielsweise je nach Material oder anderen Kriterien konzipierte, austauschbare Förderelement, wobei die Trägeranordnung durch eine Antriebsanordnung in die gewünschte Vibration versetzt wird.

Vibrationsförderer, Insbesondere solche mit einer Förderrinne sind schwer konzipierbar, werden weitgehend nach empirischen Erkenntnissen hergestellt und im Versuch mit dem zu fördernden Material betreffend Frequenz und Wurfwinkel abgeglichen. Manche Konzepte funktionieren wie gewünscht, andere zeigen einen schlechten Fördergrad, ohne dass sich im konkreten Fall die Gründe dafür durchschauen lassen.

Ein Nachteil der bekannten Vibrationsförderer betrifft die zeitverzögerte Regelbarkeit des am Ende des Förderelements bzw. der Förderrinne ausgegebenen Massenstroms, der ohne Regelung mehr oder weniger ständig etwas driftet, sei dies wegen der unregelmässigen Befüllung des Förderelements oder wegen anderen Einflüssen, was insbesondere bei der gravimetrischen Dosierung (wenn ein Vibrationsförderer auf einer Waage angeordnet ist) problematisch ist, aber auch bei der volumetrischen Dosierung Probleme schafft.

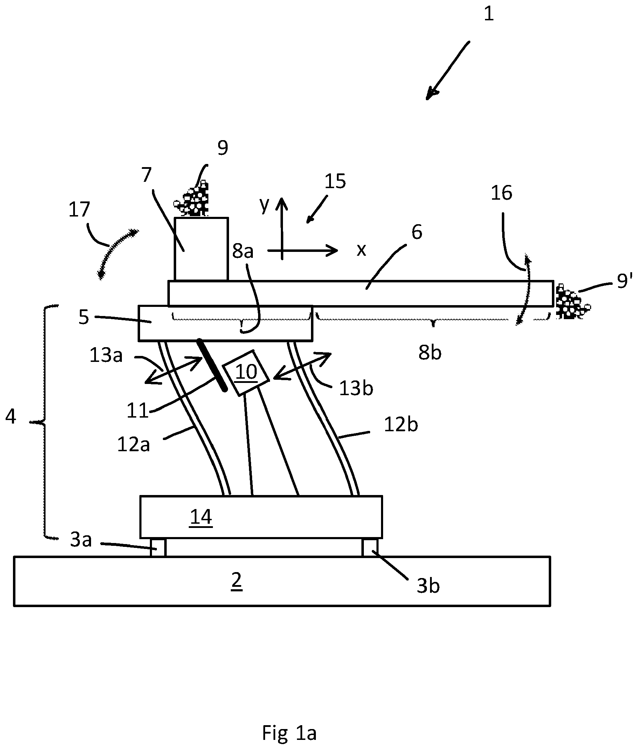

Figur 1a zeigt schematisch und beispielhaft einen Vibrationsförderer 1 gemäss dem Stand der Technik, der auf dem Untergrund 2 über eine Lageranordnung, hier elastischen Füssen oder Auflagern 3a, 3b gelagert ist. Ersichtlich sind eine Antriebseinheit 4 für eine Trägeranordnung 5, auf welcher wiederum ein hier als Förderrinne 6 ausgebildetes Förderelement angeordnet ist, welches über einen Befüllkanal 7 an seinem hinteren Abschnitt 8a mit Schüttgut 9 (z.B. Getreide, Pharmazeutische Produkte, Kunststoffgranulate und -Pulver aller Art oder metallische Materialien aller Art, etc.) beladen wird. Durch die Vibrationsbewegung der Trägeranordnung 5 vibriert die Förderrinne 6 mit, so dass das Schüttgut 9' am Ende des vorderen Abschnitts 8b der Förderrinne 6 aus dem Vibrationsförderer 1 abgegeben wird.

Die Antriebseinheit 4 weist einen Vibrationsantrieb 10 auf, der bei der gezeigten Ausführungsform als wechselstromdurchflossene Spule ausgebildet ist, die im Betrieb ein periodisches Magnetfeld ausbildet und so auf einen Magnet 11 wirkt, der wiederum an der Trägeranordnung 5 angeordnet ist und diese bewegt. Die Blattfedern 12a und 12b bilden Antriebshebel für die Trägeranordnung 5, sind im Hinblick auf den Wurfwinkel etwas geneigt und werden durch den Vibrationsantrieb 10 in die durch die Doppelpfeile 13a,b angedeutete vibrierende Bewegung versetzt, so dass die Trägeranordnung 5 durch ihre zyklische Parallelverschiebung gegenüber einer Grundplatte 14 der Antriebseinheit 4 eine Vibrationsschwingung ausführt, welche entsprechend dem durch die Richtung der Doppelpfeile 13 a,b gegebenen Wurfwinkel den Massenstrom m des Förderguts bzw. Schütttguts 9 in Förderrichtung x, erzeugt, s. das Koordinatensystem 15, dessen x-Achse in Förderrichtung und dessen y Achse senkrecht nach oben zeigt. Die Wurfrichtung hat damit eine Komponente nach vorn, in x-Richtung, und nach oben, in y-Richtung.

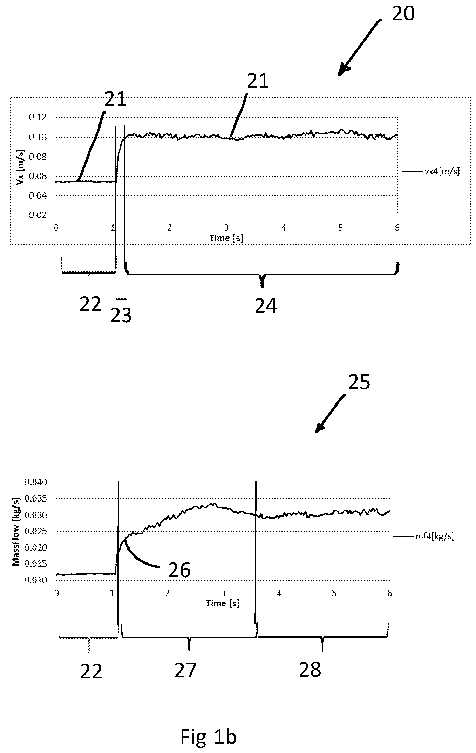

Die Antriebseinheit 4 besitzt eine Betriebsfrequenz, die im Fall einer Antriebseinheit gemäss der Figur 1 (d.h. mit Blattfedern) bevorzugt, aber nicht zwingend, der Resonanzfrequenz der der Antriebseinheit 4 entspricht, so dass die Blattfedern 12a, 12b in ihrer gemäss der Ausbildung der Antriebseinheit 4 vorliegenden Resonanzfrequenz schwingen. Alternativ kann die Antriebseinheit jedoch auch über einen Mechanischen Antrieb verfügen, so dass eine Resonanzfrequenz nicht vorliegt - sie wird dann mit einer Betriebsfrequenz betrieben.

Es ergibt sich ein Vibrationsförderer mit einer im Betrieb eine Vibrationsbewegung erzeugenden Antriebseinheit 4, und einem an der Antriebseinheit angeordneten Förderelement, wobei die Antriebseinheit 4 eine Trägeranordnung für das Förderelement aufweist, das über einen Abschnitt (8a) an der Trägeranordnung 5 gelagert ist und einen sich frei erstreckenden Abschnitt 8b aufweist.

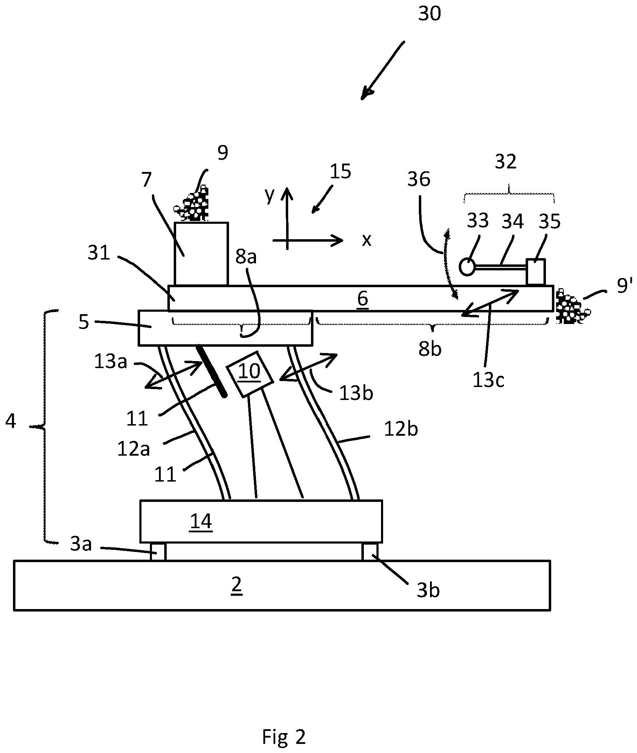

Figur 1b zeigt zwei Diagramme 20 und 25 zum Fluss des Schüttguts in der Förderrinne 6 des konventionellen Vibrationsförderers 1 (Figur 1) gemäss einer Simulation der Anmelderin zum Verhalten solch eines Vibrationsförderers als Ganzem, wobei der Fluss des Schüttguts 9' am vorderen Ende des Abschnitts 8b (Figur 1) der Förderrinne 6 dargestellt ist. Insbesondere zeigen die Diagramme von Figur 2 die Verhältnisse bei einer Erhöhung der Förderrate mit einer Steigerung des Massenstroms von ca. 0.012 kg/s auf 0.031 kg/s.

Im Diagramm 20 zeigt die Kurve 21 die Geschwindigkeit $v_x$ in Förderrichtung x (Figur 1) des Schüttguts 9' (wie oben erwähnt am vorderen Ende 8b der Förderrinne 9, s. Figur 1) über die Zeit in Sekunden (s). Im Zeitabschnitt 22 wird der Vibrationsförderer mit einer tieferen Fördermenge betrieben. Zur Zeit t = 1s erfolgt die Erhöhung der Förderrate durch Erhöhung der Amplitude der Vibrationsbewegung, wobei die Schüttgutgeschwindigkeit $v_x$ (Richtung parallel zu

der Förderrinne 6) praktisch verzugslos von der bisherigen (Abschnitt 22) auf die neue, stabile Geschwindigkeit im Zeitabschnitt 24 steigt, s. die Sprungstelle im Zeitabschnitt 23, in welchem die Änderung der Geschwindigkeit $v_x$ auf den neuen Wert stattfindet.

Das Diagramm 25 zeigt den Massenstrom m in kg/s in Förderrichtung x (Koordinatensystem 15, s. Figur 1) von Schüttgut 9' am vorderen Ende 8b der Förderrinne 6. Vor der Erhöhung der Fördermenge (Zeitabschnitt 22) ist der Massenstrom praktisch konstant. Nach der Erhöhung der Fördermenge zur Zeit t = 1s steigt der Massenstrom jedoch nur träge an und stabilisiert sich erst allmählich, mit der Folge, dass der Zeitabschnitt 27, in welchem die Änderung des Massenstroms stattfindet, ca. 3,5 s dauert. Im Zeitabschnitt 28 ist der Massenstrom auf dem neuen Wert stabil. Ein sich nur zögerlich verändernder Massenstrom bedeutet schlechte Regelbarkeit, wenigstens im Hinblick auf die Zeit.

Nach den Erkenntnissen der Anmelderin ist das Verhalten des Massenstroms über die Länge der Förderrinne 9 der Grund für die schlechte Regelbarkeit eines Vibrationsförderers gemäss Figur 1a.

Die Analyse zeigt, dass dafür zwei Gründe in Frage kommen: erstens verkippt der Vibrationsförderer 1 auf Grund der Vibrationsbewegung um seine notwendigerweise elastischen Auflager 3a und 3b, was dazu führt, dass die Förderrinne keine nur translatorische Vibrationsbewegung im Sinn der Pfeile 13a und 13b (Figur 1) ausführt, sondern auch eine der Verkipp-Bewegung entsprechende Rotation, angedeutet durch den Doppelpfeil 17. Diese Rotation wiederum hat zur Folge, dass sich der Wurfwinkel über die Länge der Förderrinne ändert, weil die Förderrinne 6 durch die Rotation nicht stets horizontal ausgerichtet bleibt, sondern durch die Rotation auch schräg steht. Damit ändert auch die Geschwindigkeit des Schüttguts über die Länge der Förderrinne 6, so dass sich entsprechend der momentanen Rotation (und so lange diese fortbesteht) der Förderrinne 6 lokale Materialhöhenunterschiede über deren Länge bilden). Ändert die Rotation der Förderrinne auf Grund der Veränderten Amplitude der Vibrationsschwingung, schichten sich die lokalen Materialhäufungen um, so dass erst nach einigen Sekunden ein neuer, stabiler Massenstrom entsteht.

Zweitens neigt, je nach der Ausbildung der Förderrinne 6, deren sich frei erstreckender Abschnitt 8b zu einer Schwingung in der Ebene der Figur 1a, so dass sich das vordere Ende des Abschnitts 8b gegenüber der Trägeranordnung 5 auf und ab bewegt, s. den Doppelpfeil 16 in Figur 1a: das vordere Ende des sich frei erstreckenden Abschnitts 8b schwingt in y Richtung gegenüber der Trägeranordnung 5 und dem auf ihr gelagerten hinteren Abschnitt 8a auf und ab, die Förderrinne 6 biegt sich gegen oben und gegen unten periodisch durch. Nach den Erkenntnissen der Anmelderin ist diese Biegeschwingung nicht nur Folge der Rotation (Doppelpfeil 17), sondern kann auch bei einem stabil gelagerten Rotationsförderer auftreten. Die Art der Schwingung ist aber abhängig von der Bauart der Förderrinne selbst und vom jeweils in ihr geförderten Material.

Der Effekt der vertikal schwingenden Förderrinne 6 hat vergleichbare Auswirkungen wie im Fall der Rotation der Förderrinne: auf Grund der Durchbiegung der Förderrinne ist der Wurfwinkel über ihre Länge nicht konstant, es bilden sich lokale Materialanhäufungen, die wiederum eine schlechte Regelbarkeit des Massenstroms zur Folge haben. Solche Schwingungen können, je nach der Ausbildung der Förderrinne, schwach ausgeprägt und damit wenig relevant oder stark ausgeprägt und damit höchst relevant werden. Die für die Verkippung bzw. Rotation des Vibrationsförderers auf Grund der elastischen Lagerung 3a, 3b (Figur 1a) erstellten Diagramme gemäss der Figur 1b sind deshalb auch dann aussagekräftig bzw. auf den Fall übertragbar, wenn ein Verkippen eines Vibrationsförderers nicht vorliegt, aber dessen Förderelement auf Grund seiner konkreten Ausbildung selbst in eine Schwingung gerät, die zu einer Deformation mit verändertem Wurfwinkel führt.

In der WO 2017/158496 ist vorgeschlagen worden, ein durch die Vibrationsbewegung hervorgerufenes Verkippen des Vibrationsförderers durch eine geeignete Ausbildung der Geometrie der Antriebsanordnung (Ort der Schwerpunkte der Komponenten des Vibrationsförderers in Verbindung mit einer geführten Lagerung) zu vermeiden. Zudem ist vorgeschlagen worden, die Anlenkpunkte der Blattfedern bzw. der die Vibrationsbewegung erzeugenden Hebel so zu verschieben, dass der Trägeranordnung an Stelle der rein translatorischen Vibrationsbewegung eine Taumelbewegung aufgezwungen wird, welche die unerwünschte Vertikalschwingung des frei verlaufenden Abschnitts 8b der Förderrinne 6 gegenüber der Trägeranordnung 5 kompensieren soll.

Nachteilig ist solch einem Vibrationsförderer, dass die Regelbarkeit des Massenstroms zwar verbessert wird, aber unerwartet schwierig bleibt. Nach den Erkenntnissen der Anmelderin führt die entsprechende Ausbildung der Trägeranordnung mit verstellbaren Anlenkpunkten immer noch zu einer Durchbiegung der Förderrinne, da die Taumelbewegung zur Folge hat, dass der hintere Abschnitts 8a schräg gestellt wird, während der vordere Abschnitt 8b in eine horizontale Ausrichtung übergeht bzw. übergehen soll, wobei dieser dann je nach Amplitude der Vibrationsbewegung mit verschiedener Biegung schwingt. Damit ist der Wurfwinkel über die Länge nicht konstant und ändert sich je nach Fördermenge, was wiederum zu den lokalen Materialanhäufungen führt, die bei der geänderten Fördermenge je nach Betriebszustand ändern können und die Regelbarkeit negativ beeinflussen. Zudem ist eine korrekte Einstellung im konkreten Fall eines in einer Linie laufenden Vibrationsförderers aufwendig und schwierig, beispielsweise auch darum, weil alle Betriebszustände und möglichen Förderrinnen antizipiert und in der mechanischen Verstellung der Anlenkpunkte vorgesehen werden müssen.

Entsprechend ist es die Aufgabe der vorliegenden Erfindung, einen verbesserten Vibrationsförderer mit kurzer Regelungszeit zu schaffen.

**EP 3 774 603 B1**

Diese Aufgabe wird gelöst durch einen Vibrationsförderer mit den kennzeichnenden Merkmalen von Anspruch 1.

Dadurch, dass eine auf das Förderelement selbst wirkende federelastisches Schwingungsanordnung zur Einhaltung eines konstanten Wurfwinkels vorgesehen wird, steht eine sehr einfache Konstruktion zur Verfügung, die eine Einheit mit dem Förderelement bildet und so leicht für die verschiedensten, auch sehr langen oder sehr elastischen Förderelemente mit unterschiedlichen Schüttgütern abstimmbar ist. Dies betrifft auch Förderrinnen, die heute noch nicht in Gebrauch sind, aber von einem Linienbetreiber für die jeweilige Linie gewünscht werden könnten. Zudem erlaubt eine Schwingungsanordnung, den Wurfwinkel über die ganze Länge des Förderelements in einem engen Bereich zu halten, was eine sehr schnelle Regelbarkeit des Massenstroms erlaubt.

Weitere bevorzugte Ausführungsformen weisen die Merkmale der abhängigen Ansprüche auf.

Die Erfindung wird nachstehend anhand der Figuren noch etwas näher beschrieben.

Es zeigt:

Fig. 1a    eine schematische Darstellung eines Vibrationsförderers des Stands der Technik,

Fig. 1b    zwei Diagramme zum Fluss des Schüttguts im Vibrationsförderer des Stands der Technik nach Figur 1, jeweils vor und nach der Änderung der Fördermenge,

Fig. 2    eine Ansicht auf einen erfindungsgemäss modifizierten Vibrationsförderer,

Fig. 3a und 3b    ein Diagramm zur den Amplituden und der Phasenverschiebung der harmonischen Schwingung, und

Fig. 4    schematisch eine Ansicht auf eine weitere Ausführungsform des Vibrationsförderers von Figur 2.

Figur 2 zeigt eine Ansicht einer Ausführungsform eines erfindungsgemässen Vibrationsförderers 30, dessen Grundaufbau demjenigen von Figur 1a entspricht, wobei das als Förderrinne 31 ausgebildete Förderelement an seinem sich frei erstreckenden Abschnitt 8b eine Schwingungsanordnung 32 aufweist. In der gezeigten Ausführungsform weist diese eine Masse 33 auf, die über eine als federelastische Zunge 34 ausgebildete Federanordnung mit einer Befestigungsanordnung 35 gegenüber der Förderrinne 6 beweglich an dieser festgelegt ist und ein federelastisches Pendel bildet.

Durch die translatorische Vibrationsbewegung der Trägeranordnung 5 (Pfeile 13a und 13b) bewegt sich im Betrieb des Vibrationsförderers 30 der Abschnitt 8b der Förderrinne 31 entsprechend mit, wodurch die Masse 33 gegenüber der Förderrinne 6 und gegenüber der Antriebsanordnung 4 in eine durch den Doppelpfeil 36 gezeigte Schwingung gerät, bei richtiger Abstimmung jedoch derart, dass der vordere Abschnitt 8b nur noch die Translationsbewegung gemäss dem Pfeil 13c ausführt, also eine Biegung der Förderrinne 31 im Sinn des Doppelpfeils 16 (Figur 1a) im Wesentlichen bzw. ganz unterbleibt. Damit ist eine Änderung des Wurfwinkels über die Länge der Förderrinne 31 reduziert oder verhindert.

Dabei besitzen die Förderrinne 31, die Schwingungsanordnung 32 und die Antriebsanordnung 4 je eine Resonanzfrequenz (im Fall der Antriebsanordnung 4 eventuell eine Betriebsfrequenz), die alle voneinander verschieden sind. Häufig ist es so, dass die Resonanzfrequenz der steif auszubildenden Förderrinne 31 höher ist als diejenige der Antriebsanordnung, welche bei vielen Vibrationsförderern des Stand der Technik im Bereich von 60 Hz liegt. Dann ist erfindungsgemäss die Schwingungsanordnung 32 derart auszulegen, dass ihre Resonanzfrequenz tiefer ist als Resonanz- oder Betriebsfrequenz der Antriebsanordnung 4. Es sei an dieser Stelle aber angemerkt, dass erfindungsgemäss nun auch eine weiche Förderrinne verwendet werden kann, oder eine aussergewöhnlich lange Förderrinne, wie dies je nach der Konzeption der Linie im konkreten Fall an sich wünschbar wäre, aber wegen der schlechten Regelbarkeit - ohne dass die genauen Gründe dafür bekannt wären - nicht vorgesehen werden kann.

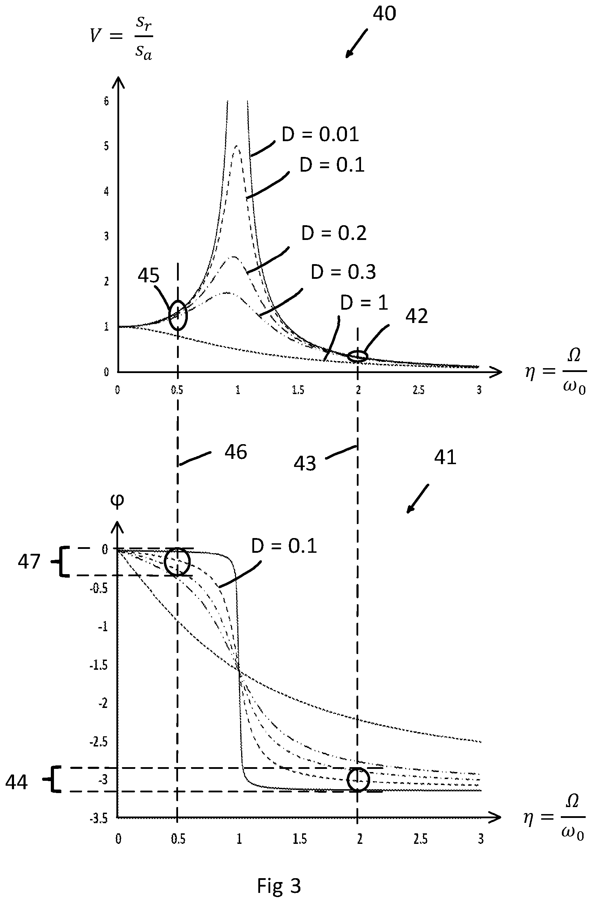

Figur 3 zeigt das Verhalten des Förderelements 6 und der Schwingungsanordnung 32 anhand der an sich bekannten Diagramme 40,41 für die erzwungene, harmonische Schwingung von Feder-Massesystemen. Das Förderelement stellt ein solches Feder-Massesystem dar, ebenso die Schwingungsanordnung 32. Die Diagramme 40,41 zeigen verschiedene Kurven je nach der Dämpfung des Feder-Massesystems (von D = 0.01 bis D = 1). An dieser Stelle sei angemerkt, dass die Dämpfung des Förderelements und der Schwingungsanordnung problemlos sehr tief gehalten werden kann, so dass die Betriebspunkte bzw. Betriebsbereiche (s. dazu unten) auf oder nahe der steilsten Kurven liegen.

Auf der horizontalen Achse beider Diagramme 40, 41 ist das Verhältnis $\eta = \frac{\Omega}{\omega_0}$ abgetragen, also das Verhältnis der Anregungsfrequenz $\Omega$ zur Resonanzfrequenz $\omega_0$ des Feder-Massesystems (hier der Förderrinne 6 und der Schwingungsanordnung 32). Auf der vertikalen Achse ist im Diagramm 40 das Verhältnis $V = \frac{s_r}{s_a} = \frac{1}{\sqrt{(1-\eta^2)^2 + 4D^2\eta^2}}$ d.h.

4

der resultierende Amplitude $s_r$ des Feder-Massesystems zur anregenden Amplitude $s_a$ abgetragen, im Diagramm 41 die Phasenverschiebung (φ zwischen der anregenden Schwingung und der dadurch angeregten Schwingung des Feder-Massesystems. Dabei ist die Phasenverschiebung $\varphi = \arctan\left(\frac{-2D\eta}{1-\eta^2}\right)$, wo D der Dämpfungsfaktor und $\eta = \frac{\Omega}{\omega_0}$ ist.

Die Trägeranordnung 5 (Figur 2) schwingt im Betrieb mit ihrer Betriebsfrequenz, d.h. mit dieser Frequenz auch jeweils deren vorderer Abschnitt 8b gegenüber dem hinteren Abschnitt 8a sowie die Pendelmasse 33 gegenüber dem vorderen Abschnitt 8b. Es folgt, dass alle Komponenten mit derselben Frequenz schwingen, und die eine Komponenten die nächste zur Schwingung anregt, d.h. der hintere Abschnitt 8a den vorderen Abschnitt 8b und dieser dann die Pendelmasse 33. Die anregende Schwingung Ω entspricht also stets der Betriebsschwingung der Trägeranordnung 5, während die Resonanzfrequenz $\omega_0$ des Förderelements bzw. der Schwingungsanordnung 32 von dieser erfindungsgemäss verschieden ist.

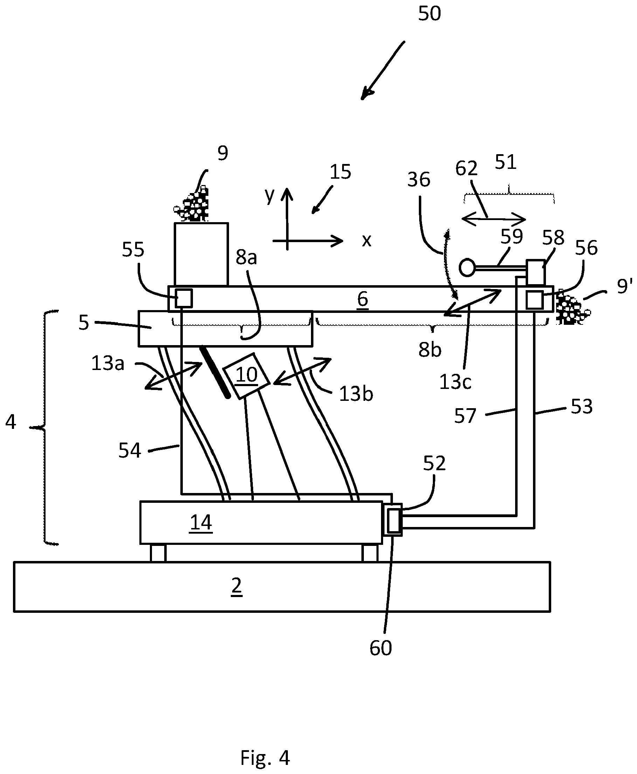

Besitzt die Förderrinne eine Resonanzfrequenz von beispielsweise 120 Hz, die also höher ist als die Betriebsfrequenz der Trägeranordnung 5 (beispielsweise 60 Hz, s. oben), beträgt für die Schwingung der Förderrinne 6 das Verhältnis $\eta = \frac{\Omega}{\omega_0} = 0{,}5$ [nicht durchstreichen], s. den Betriebsbereich 45 im Diagramm 40 (der genaue Betriebspunkt hängt von der Dämpfung der Förderrinne ab). Über die Linie 46 ist erkennbar, dass die Phase des vorderen Abschnitts 8b bzw. dessen vorderen Endes gegenüber dem hinteren Ende 8a (am Ort der Verbindung mit der Trägeranordnung 5) nahe bei φ = 0⁰ liegt, s. den Bereich 47 - die Phase des hinteren Abschnitts 8a liegt im Vergleich zur Trägeranordnung 5 bei 0⁰ da sie starr mit der Trägeranordnung 5 verbunden ist (eine starre Verbindung resultiert in $\omega_0 = \infty$ d.h. $\eta = \frac{\Omega}{\omega_0} = 0$). (In der gezeigten Ausführungsform gemäss Fig. 2 oder 4 beträgt die Phase zwischen der Antriebskraft zwischen dem Magnet 11 und der Spule der Antriebsanordnung 10 und der Trägeranordnung 5 -90°, die Kraft ist im Resonanzfall 90° oder π/2 voreilend.)

Besitzt die Schwingungsanordnung 32 eine Resonanzfrequenz von beispielsweise 30 Hz, die also tiefer ist als die Betriebsfrequenz der Trägeranordnung 5 (beispielsweise 60 Hz, s. oben), beträgt das Verhältnis $\eta = \frac{\Omega}{\omega_0} = 2$ s. den Betriebsbereich 42 im Diagramm 40 (der genaue Betriebspunkt hängt von der Dämpfung der Förderrinne ab). Über die Linie 43 ist erkennbar, dass die Phase 44 der Pendelmasse 33 gegenüber dem vorderen Ende 8b (am Ort der Verbindung mit der Befestigung an der Rinne 35) nahe bei φ = -180⁰ liegt, s. den Bereich 44.

In diesem Fall schwingt die Pendelmasse 33 nahezu oder im Gegentakt zum vorderen Ende der Förderrinne 6, mit der Folge, dass sie über die federelastische Zunge 34 eine Querkraft und ein Biegemoment in die Förderrinne einleitet, welche deren momentanen Durchbiegung entgegengesetzt ist, so dass diese Durchbiegung bei geeigneter Abstimmung der Schwingungsanordnung 33 und des Förderelements 6 vermindert wird oder verschwindet. Dies wiederum bedeutet, dass der Wurfwinkel über die Länge des Förderelements weniger oder nicht ändert, also eine schnelle Regelbarkeit des Massenstroms resultiert.

Es ergibt sich, dass am vorderen Abschnitt (8b) des Förderelements (6) eine federelastische Schwingungsanordnung vorgesehen wird, die derart angeordnet und ausgebildet ist, dass diese in Bezug auf die Schwingung der Antriebsanordnung mit zu der Phasenverschiebung des Förderelements entgegengesetzter Phasenverschiebung schwingt. Je nach der Dämpfung des Förderelements bzw. der Schwingungsanordnung beträgt diese Phasenverschiebung 180⁰ oder liegt nahe bei 180⁰, ist jedoch so gross, dass die Regelbarkeit des erfindungsgemässen Vibrationsförderers gegenüber einer Ausführungsform ohne Schwingungsanordnung verbessert ist.

Sollte das Förderelement eine tiefere Resonanzfrequenz aufweisen als die Frequenz der Trägeranordnung 6, vertauschen sich die Betriebsbereiche 42,45 im Diagramm 40. Nach wie vor schwingen aber Förderelement und Schwingungsanordnung grundsätzlich im Gegentakt, so dass die Durchbiegung des Förderelements vermindert wird oder verschwindet.

Es ergibt sich weiter, dass die Eigenfrequenzen des Förderelements 6 und der Schwingungsanordnung 32 von der Betriebsfrequenz der Trägeranordnung 4 verschieden sind und dieser gegenüber die Eine der Eigenfrequenzen höher, die Andere tiefer ist. Bevorzugt ist jedoch die die Eigenfrequenz des Förderelements höher ist als diejenige der Schwingungsanordnung 32. Ein Förderelement, insbesondere wenn es als Förderrinne ausgebildet ist, kann schon nur auf Grund seines rinnenförmigen Querschnitts in der Regel bezüglich der Vertikalrichtung y leicht vergleichsweise steif ausgebildet werden, was zu einer vergleichsweise hohen Resonanzfrequenz führt. Andererseits ist es aber auch so, dass im Fall von längeren Förderelementen, kombiniert mit entsprechendem Material eine unter der Betriebsfrequenz liegende Resonanzfrequenz gegeben sein kann. Es sei hier angemerkt, dass mit Hilfe der vorliegenden Erfindung Förderrinnen bzw. Förderelemente mit grösserer Länge in Betracht gezogen werden können, als es bisher unter dem Aspekt der Regelung der Fördermenge der Fall war.

Wie in Figur 2 gezeigt, besitzt die Schwingungsanordnung 32 vorzugsweise eine Pendelmasse 33 und eine federelastische Schwingungsanordnung 34, über welche sie am Förderelement 6 festgelegt ist. Dabei ist weiter bevorzugt die federelastische Schwingungsanordnung als Blattfeder oder stabförmige Feder 34 ausgebildet ist, die parallel zur Förderrichtung des Förderelements angeordnet ist.

Das Schwingungsverhalten des Förderelements, beispielsweise einer Förderrinne 6 ist komplex, auch darum weil die Vibrationsschwingung in zwei Richtungen (x und y, s. Figur 1a) erfolgt. Da die Förderrinne 6 in x Richtung steif ist, ergibt sich kaum eine Schwingungskomponente in x Richtung des vorderen Endes des freien Abschnitts 8b, sondern im Wesentlichen nur eine Schwingung in der Vertikalen, d.h. in y Richtung, also die oben erwähnte Biegeschwingung. Für die Pendelmasse 32 bedeutet dies trotzdem, dass sie sich auf einer elliptischen Bahn bewegt und die Bewegungen in der x Richtung einen Einfluss haben können. Obschon erfindungsgemäss auch schon eine erste, standardisierte Abstimmung von Förderelement und Schwingungsanordnung im Hinblick auf die Betriebsfrequenz bereits vorteilhaft ist und die vertikale Biegeschwingung des Förderelements (nur) reduziert, kann im konkreten Fall eine Feinabstimmung wünschenswert sein, insbesondere bei pharmakologischen Schüttgütern. Diese Feinabstimmung ist erfindungsgemäss einfach vorzunehmen: ein beispielsweise in der Schwingungsanordnung 32 sehr einfach vorzunehmender Austausch der Pendelmasse 33 oder eine Verlängerung oder Verkürzung der Feder 34 erlauben eine Feinabstimmung mit geringem Aufwand derart, dass die Biegeschwingung des Förderelements annähernd oder ganz unterdrückt werden. Beispielsweise ändert sich im Fall der Änderung der Länge der Feder 34 die Resonanzfrequenz der Schwingungsanordnung, so dass sich deren Amplitude ändert, s. dazu das Diagramm 40 von Figur 3. Damit kann die Amplitude der Schwingungsanordnung 32 auf das Förderelement derart abgestimmt werden, dass dessen Biegeschwingung im Wesentlichen verschwindet.

Eine Simulation der Anmelderin hat zu dem folgendem Ergebnis geführt:

| | ohne Schwingungsanordnung | mit Schwingungsanordnung |
|---|---|---|
| Eigenfrequenz der Schwingungsanordnung [Hz] | - | 55.27 |
| Betriebsfrequenz der Trägeranordnung [Hz] | 70.32 | 69.79 |
| Resonanzfrequenz der Förderrinne [Hz] | 104.55 | 99.69 |
| Vibrationsschwingung: Verschiebung der Trägeranordnung in y Richtung [mm] | 0.171 | 0.171 |
| Vibrationsschwingung: Verschiebung des vorderen Endes der Förderrinne in y Richtung [mm] | 0.368 | 0.172 |
| Änderung der y - Komponente der Amplitude im Förderelement vorne / hinten | 115.2% | 0.6% |
| Wurfwinkel der Trägeranordnung | 20° | 20° |
| Wurfwinkel des Förderelements vorne | 38.1° | 20.1° |
| Änderung des Wurfwinkels | 90.3% | 0.53% |
| Simulierte Änderung der Geschwindigkeit und der Höhe des Schüttguts (Materialhöhenunterschied im Förderelement) | 51.0% | 0.44% |

was zeigt, dass sich die erfindungsgemässe Anordnung derart abstimmen lässt, dass der Einfluss der Biegeschwingung des Förderelements praktisch verschwindet.

Die Werte für die simulierte Änderung der Geschwindigkeit/Höhe des Schüttguts basieren auf dem Wurfwinkel über die Länge der Rinne - bei der Vibrationsbewegung (Pfeile 13a,b in den Figuren 2 und 4) ist die Verschiebung der Förderrinne 6 in x - Richtung stets als konstant angenommen, während die Verschiebung des Endes des vorderen Abschnitts 8b gegenüber dem hinteren Abschnitt 8a in y - Richtung ohne Pendelanordnung 32 erheblich ändert, s. oben. In der Simulation wurde das Schüttgut am Ende des vorderen Abschnitts ohne Schwingungsanordnung wegen der Änderung des Wurfwinkels um 90.3% schneller, die Materialgeschwindigkeit steigt um 51% wobei die Materialhöhe entsprechend um 51% sank. Diese Änderung führt zur verschlechterten Regelbarkeit, s. oben, die Beschreibung zu Figur 2. Erfindungsgemäss erfolgt nun eine Änderung um nur 0,44% (statt 51%), somit besteht eine verbesserte, d.h. im Wesentlichen unverzögerte Regelbarkeit.

Figur 4 zeigt schematisch eine Ausführungsform eines Vibrationsförderers 50, der demjenigen von Figur 2 entspricht, jedoch eine Einrichtung zur automatischen Abstimmung der Schwingungsanordnung 51 aufweist. Dargestellt ist eine Steuerung 60 des Vibrationsförderers 50 mit einer Regeleinheit 52, die über Datenleitungen 53,54 mit einem hinteren Sensor 55 für die Vertikalbewegung des hinteren Abschnitts 8a und einen vorderen Sensor 56 für die Vertikalbewegung des freien Abschnitts 8b sowie einer Datenleitung 57 mit einem Stellantrieb 58 für die Blattfeder 59 verbunden ist.

Die Regeleinheit 52 erfasst über den Sensor 55 die vertikale Komponente der Vibrationsbewegung der Trägeranordnung 5 bzw. des hinteren Endes der Förderrinne 6 und über den Sensor 56 die vertikale Komponente der Vibrationsbewegung des vorderen Endes der Förderrinne 6. Weichen diese Komponenten voneinander um einen vorgegebenen, in der Steuerung 60 gespeicherten Schwellwert ab, generiert die Regeleinheit 52 ein Korrektursignal für den Stellantrieb 58, der dadurch die Blattfeder 59 etwas einzieht (also verkürzt) oder ausfährt (also verlängert), s. den Doppelpfeil 62. Dadurch ändert wie oben ausgeführt die Amplitude der Schwingung der Schwingungsanordnung 51. Die Regeleinheit 52 kann nun diesen Zyklus laufend abarbeiten und so eine Drift in der Abstimmung von Schwingungsanordnung 51 und Förderelement 6 auf Grund von sich verändernden Betriebsbedingungen reduzieren oder verhindern. Ebenso ist es möglich, dass der die Regeleinheit 52 auf diese Weise einen für eine konkrete Förderaufgabe nur annähernd abgestimmten Vibrationsförderer 50 im Betrieb richtig abstimmt, wobei die Regelgenauigkeit durch den vorbestimmten Schwellwert eingestellt werden kann.

Die Sensoren 55, 56 können als einfache Beschleunigungssensoren ausgebildet sein, wie sie z.B. unter der Bezeichnung MPU-6050 von TDK InvenSense erhältlich sind. Je nach dem Aufbau des Vibrationsförderers 50 können an Stelle der Daten des hinteren Sensors 55 auch andere, vorhandene Daten verwendet werden, da die Bewegung der Trägeranordnung 5 definiert ist - auf jeden Fall aber werden die Vertikalbewegungen des hinteren Abschnitts mit denjenigen des vorderen Abschnitts des Förderelements verglichen und eine Abweichung durch eine Regelung der Schwingungsanordnung 51 korrigiert, bis sie unter einen vorbestimmten Sollwert fällt. Der Fachmann kann solch einen Regelungszyklus für den konkreten Fall leicht bestimmen.

Es ergibt sich ein Vibrationsförderer mit einem vorderen Sensor 56 für die Vertikalbewegung des vorderen Abschnitts 8b des Förderelements 6 und mit einer Steuerung 60, die ausgebildet ist, im Betrieb aus den Daten des vorderen Sensors 56 eine Abweichung der Vertikalbewegung des vorderen Abschnitts 8b von der Vertikalbewegung des hinteren Abschnitts 8a zu erkennen und ein Korrektursignal für eine Stellanordnung 58 der Schwingungsanordnung 51 zu generieren, derart, dass die beiden Vertikalbewegungen sich einander angleichen. Bevorzugt weist der Vibrationsförderer einen hinteren Sensor für die Vertikalbewegung des hinteren Abschnitts 8a des Förderelements auf. Weiter bevorzugt ist der vordere Sensor 56 und besonders bevorzugt der hintere Sensor 55 als Beschleunigungssensor ausgebildet.

Bei einem nicht in den Figuren dargestellten Ausführungsbeispiel besitzt die Schwingungsanordnung zwei schwingende Massen, je eine auf jeder Seite des vorderen Endes der Förderrinne. Diese können dann auch quer von der Förderrinne abstehenden Blattfedern angeordnet sein.

Alternativ ist es auch erfindungsgemäss, eine schwingende Masse an einer vertikal angeordneten Spiralfeder aufzuhängen, und eine derart ausgebildete Schwingungsanordnung am vorderen Ende des Förderelements anzuordnen. Auch möglich ist es, die schwingende Masse zwischen zwei Federn anzuordnen. Für die erfindungsgemässe Schwingungsanordnung sind zahlreiche Bauformen denkbar. So kann die schwingende Masse auch an einer quer zum Förderelement angeordneten Blattfeder oder einer vertikal angeordneten Spiralfeder angeordnet sein. Ebenso kann eine vertikale Blattfeder verwendet werden, wobei in diesem Fall eine Korrektur der unerwünschten Schwingung des vorderen Endes des Abschnitts 8b durch das erzeugte Moment in der Förderrinne 6 erfolgen würde.

**Patentansprüche**

1. Vibrationsförderer mit einer im Betrieb eine Vibrationsbewegung erzeugenden Antriebseinheit (4), und einem an der Antriebseinheit (4) angeordneten Förderelement (6), wobei die Antriebseinheit (4) eine Trägeranordnung (5) für das Förderelement (6) aufweist, das über einen hinteren Abschnitt (8a) an der Trägeranordnung (5) gelagert ist und einen sich frei erstreckenden Abschnitt (8b) aufweist, **dadurch gekennzeichnet, dass** am vorderen Abschnitt (8b) des Förderelements (6) eine federelastische Schwingungsanordnung (32) vorgesehen ist, die derart angeordnet und ausgebildet ist, dass diese im Betrieb des Vibrationsförderers in Bezug auf die Schwingung der Antriebseinheit (4) mit zu der Phasenverschiebung des Förderelements (6) entgegengesetzter Phasenverschiebung schwingt.

2. Vibrationsförderer nach Anspruch 1, wobei die Resonanzfrequenzen des Förderelements (6) und der Schwingungsanordnung (32) von der Betriebsfrequenz der Trägeranordnung (4) verschieden sind und dieser gegenüber die Eine der Resonanzfrequenzen höher, die Andere tiefer ist.

3. Vibrationsförderer nach Anspruch 1, wobei die Resonanzfrequenz des Förderelements höher ist als diejenige der Schwingungsanordnung (32). []

4. Vibrationsförderer nach Anspruch 1, wobei die Schwingungsanordnung (32) eine Pendelmasse (33) und eine federelastische Pendelaufhängung (34) aufweist, über welche sie am Förderelement (6) festgelegt ist.

**5.** Vibrationsförderer nach Anspruch 1, wobei die federelastische Pendelaufhängung als Zunge (34) ausgebildet ist, die parallel zur Förderrichtung x des Förderelements (6) angeordnet ist.

**6.** Vibrationsförderer nach Anspruch 4, wobei die federelastische Schwingungsanordnung zwei Massen aufweist, die auf entgegengesetzten Seiten des Förderelements angeordnet sind.

**7.** Vibrationsförderer nach Anspruch 1, mit einem vorderen Sensor (56) für die Vertikalbewegung des vorderen Abschnitts (8b) des Förderelements (6) und mit einer Regeleinheit (52), die ausgebildet ist, im Betrieb aus den Daten des vorderen Sensors (56) eine Abweichung der Vertikalbewegung des vorderen Abschnitts (8b) von der Vertikalbewegung des hinteren Abschnitts (8a) zu erkennen und ein Korrektursignal für eine Stellanordnung (58) der Schwingungsanordnung (51) zu generieren, derart, dass die beiden Vertikalbewegungen sich einander angleichen.

**8.** Vibrationsförderer nach Anspruch 7, wobei er einen hinteren Sensor (55) für die Vertikalbewegung des hinteren Abschnitts (8a) des Förderelements (6) aufweist.

**9.** Vibrationsförderer nach Anspruch 7 oder 8, wobei der vordere Sensor (56) und besonders bevorzugt der hintere Sensor (55) als Beschleunigungssensor ausgebildet ist.

**Claims**

**1.** Vibratory conveyor comprising a drive unit (4) that generates a vibration movement during operation, and a conveying element (6) arranged on the drive unit (4), wherein the drive unit (4) comprises a support arrangement (5) for the conveying element (6), which is mounted on a rear section (8a) on the support arrangement (5) and has a freely extending section (8b), **characterized in that** a spring-elastic vibration arrangement (32) is provided on the front section (8b) of the conveying element (6), said vibration arrangement (32) being arranged and designed in such a way that it oscillates during operation of the vibratory conveyor with respect to the oscillation of the drive unit (4) with phase displacement counter to the phase displacement of the conveying element (6).

**2.** Vibratory conveyor according to Claim 1, wherein the resonance frequencies of the conveying element (6) and the vibration arrangement (32) are different from the operating frequency of the support arrangement (4), and this is higher than the one of the resonance frequencies; the other is lower.

**3.** Vibratory conveyor according to Claim 1, wherein the resonance frequency of the conveying element is higher than that of the vibration arrangement (32).

**4.** Vibratory conveyor according to Claim 1, wherein the vibration arrangement (32) comprises a pendulum mass (33) and a spring-elastic pendulum suspension (34), via which it is fixed to the conveying element (6).

**5.** Vibratory conveyor according to Claim 1, wherein the spring-elastic pendulum suspension is formed as a tongue (34), which is arranged parallel to the conveying direction x of the conveying element (6).

**6.** Vibratory conveyor according to Claim 4, wherein the spring-elastic vibration arrangement has two masses, which are arranged on opposite sides of the conveying element.

**7.** Vibratory conveyor according to Claim 1, with a front sensor (56) for the vertical movement of the front section (8b) of the conveying element (6) and with a control unit (52), which is designed to detect in operation from the data of the front sensor (56) a deviation of the vertical movement of the front section (8b) from the vertical movement of the rear section (8a) and to generate a correction signal for an actuator arrangement (58) of the vibration arrangement (51) in such a way that the two vertical movements converge with each other.

**8.** Vibratory conveyor according to Claim 7, wherein it comprises a rear sensor (55) for the vertical movement of the rear section (8a) of the conveying element (6).

**9.** Vibratory conveyor according to Claim 7 or 8, wherein the front sensor (56) and, particularly preferably, the rear sensor (55) is designed is an acceleration sensor.

**Revendications**

1. Convoyeur vibrant, doté d'une unité d'entraînement (4), générant un mouvement vibratoire en cours de fonctionnement et d'un élément de convoyage (6), placé sur l'unité d'entraînement (4), l'unité d'entraînement (4) comportant un ensemble porteur (5) pour l'élément de convoyage (6), qui par l'intermédiaire d'un segment (8a) arrière est logé sur l'ensemble porteur (5) et qui comporte un segment (8b) s'étendant librement, **caractérisé en ce que** sur le segment (8b) avant de l'élément de convoyage (6) est prévu un ensemble vibrant (32) résilient, qui est placé et conçu de telle sorte qu'en cours de fonctionnement du convoyeur vibrant, par rapport à la vibration de l'unité d'entraînement (4), il vibre avec un décalage de phase opposé à celui du décalage de phase de l'élément de convoyage (6).

2. Convoyeur vibrant selon la revendication 1, les fréquences de résonance de l'élément de convoyage (6) et de l'ensemble vibrant (32) étant différentes de la fréquence de fonctionnement de l'ensemble porteur (4) et par rapport à celle-ci, l'une des fréquences de résonance était plus élevée et l'autre étant plus basse.

3. Convoyeur vibrant selon la revendication 1, la fréquence de résonance de l'élément de convoyage étant plus élevée que celle de l'ensemble vibrant (32).

4. Convoyeur vibrant selon la revendication 1, l'ensemble vibrant (32) comportant une masse pendulaire (33) et une suspension pendulaire (34) résiliente, par l'intermédiaire de laquelle, il est fixé sur l'élément de convoyage (6).

5. Convoyeur vibrant selon la revendication 1, la suspension pendulaire résiliente étant conçue sous la forme de languette (34), qui est placée à la parallèle de la direction de convoyage x de l'élément de convoyage (6) .

6. Convoyeur vibrant selon la revendication 4, l'ensemble vibrant résilient comportant deux masses, qui sont placées sur des côtés opposés de l'élément de convoyage.

7. Convoyeur vibrant selon la revendication 1, doté d'un capteur (56) avant pour le déplacement vertical du segment (8b) avant de l'élément de convoyage (6) et pourvu d'une unité de réglage (52), qui est conçue pour identifier en cours de fonctionnement à partir des données du capteur (56) avant une divergence entre le déplacement vertical du segment (8b) avant et le déplacement vertical du segment (8a) arrière et pour générer un signal de correction pour un ensemble de réglage (58) de l'ensemble vibrant (51), de telle sorte que les déplacements verticaux s'ajustent l'un à l'autre.

8. Convoyeur vibrant selon la revendication 7, celui-ci comportant un capteur (55) arrière pour le déplacement vertical du segment (8a) arrière de l'élément de convoyage (6).

9. Convoyeur vibrant selon la revendication 7 ou 8, le capteur (56) avant et de manière particulièrement préférentielle, le capteur (55) arrière étant conçu sous la forme d'un capteur d'accélération.

Fig 1a

Fig 1b

Fig 2

Fig 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1460006 A1
- WO 2017158496 A